# EUROPEAN PATENT APPLICATION

(11) **EP 4 371 863 A1**
(43) Date of publication of application: **22.05.2024**
(21) Application number: 22841541.0
(22) Date of filing: 20.06.2022
(51) Int. Cl.: B62J 11/24, B62J 27/30

(54) **SAFETY BUMPER FOR SCOOTERS**

(30) Priority: 12.07.2021 ES 202131453 U
(71) Applicant: Centro de Experimentación y Seguridad Vial Mapfre S.A. (CESVIMAP), 05004 Ávila (ES)
(72) Inventor: CANCER ABOITIZ, José María, 05004 Ávila (ES); GARRANDES ASPRÓN, Jorge, 05004 Ávila (ES); CUADRADO PÉREZ, Isabel, 05004 Ávila (ES)
(74) Representative: Elzaburu S.L.P.
(86) International application number: PCT/ES2022/070388
(87) International publication number: WO 2023/285713

(57) **Abstract**

A safety bumper for use on scooters, comprising a body made of thermoplastic materials, formed by two covers, one front and one rear, which are joined together by a lower hinge and which can be opened by a mechanical closing/opening mechanism located at the top of the covers.

## Description

Passive safety element to be installed on scooters that, in addition, allows the safety helmet of the scooter rider to be stored inside, and whose purpose is to absorb the energy from an impact in an accident, in order to reduce injuries to both the scooter rider and the pedestrian run over in the event of this circumstance.

### OBJECT OF THE INVENTION

In the event of an impact or accident between a scooter and a person or object, there is a transmission of energy between the impacting scooter and that against which it impacts.

This energy is transmitted, fundamentally it is the kinetic energy of the scooter and its rider, which, when impact occurs, is transmitted onto the object or person impacted in the form of deformation energy, which in the case of a person who has been hit, will cause injuries and damage to the body.

The design of current scooters does not incorporate passive safety systems that allow the absorption of the kinetic energy released in an accident, without transmitting it to the rider of the scooter, or to any of the possible participants in it, or achieving an impact with less violence.

The purpose of this invention is to be able to have a passive safety system in any scooter that is activated in the event of an impact and absorbs all or part of the energy produced in the impact and thus prevents said energy from being transmitted to the rider of the scooter or to the pedestrian run over (in the event that this circumstance occurs), reducing injuries.

In addition, due to the design of scooters, these vehicles do not have any housing or system to store the safety helmet used by the scooter rider when not wearing it.

As the invention is a closed volume and designed with a certain shape that allows the safety helmet to be stored inside, and whose access is exclusive to the user of the scooter, when the helmet is not being used, it may remain conveniently stored and protected against inclement weather, vandalism and theft.

The front, side and back of a scooter in the steering area have little surface on which reflective elements can be placed to help make the scooter more visible when being ridden in urban areas.

Yet another objective of the invention is that, by increasing these surfaces in the front and side area of the scooter, reflective elements can be placed that increase the visibility of the scooter/rider assembly, from any angle, and therefore make it more visible. This prevents any other urban traffic vehicle from inadvertently impacting against it, thus also increasing the active safety of the scooter in traffic.

### STATE OF THE ART

In recent years there has been a very significant increase in the number of scooters in urban environments, mainly due to the increase in the number of electric scooters sold in the Spanish market, increased by the recent pandemic that we have suffered worldwide, which has meant that the number of accidents with these vehicles has also grown considerably.

These circumstances are reflected in the study presented by Fundación MAPFRE in 2021, which also focuses on the increase in the number of fatalities, and which is accessible from the following link: https://documentacion.fundacionmapfre.org/documentacion/publico/es/catalogo i magenes/grupo.do?path=1109839

For this reason, and because the design of the scooters themselves does not incorporate any passive protection system to prevent damage to the rider of the scooter, it is necessary to develop systems that contribute to minimizing injuries, in the event of accidents, both to the driver of the VMP and to the pedestrian run over.

To this end, a safety bumper system for scooters has been developed, whose functions are: to prevent the energy released in an accident from being transmitted entirely to the rider of the scooter, thus minimising the injuries that could occur to the rider and protecting the pedestrian run over in the event of an accident, as well as serving as a housing to store the rider's safety helmet, when the rider is not wearing it.

Analysing the state of the art, the existence of a passive safety system based on an AUTOLIV air bag has been taken into account for the development of this invention, which is deployed from the scooter in the event of an accident, and which can be seen in the YouTube video at the following link: https://www.youtube.com/watch?v=BCDXjJwA5Ac

This system has the following drawbacks: It considerably increases the weight of the scooter in its steering column, which will compromise its dynamic safety, since it substantially modifies the distribution of weight on a standard scooter. It also considerably increases the complexity of its installation to achieve the activation of the air bag system, requiring a laborious and complex adaptation of systems to the standard scooter, while exponentially raising the price of the set, especially compared to the price of the scooter without the air bag system. The third drawback is that it is only useful for an accident, since it cannot be reused later, so the air bag system would be useless after an accident and the scooter would need major repairs. And the fourth drawback is that the fixing bolts of the air bag system are located in a position close to the body of the rider of the scooter, which means that they will cut into it at the time of the accident, as shown in the video of the system.

There is another system that allows the transportation load on the electric scooter, consisting of a rigid plastic box, mounted behind the steering column and between it and the body of the rider of the scooter.

This system is registered as utility model AU 2020102958 A4 (CN212515982U). The following Youtube link demonstrates this system, as well as its operation: https://youtu.be/4XOG0NwijJM

This model allows you to carry a special helmet in the plastic box that folds into three sections.

This system has very important drawbacks from the point of view of the dynamic safety of the electric scooter, since, due to its design and location in the vehicle, it will not absorb any of the energy released in the event of a collision, transmitting it almost entirely to the body of the rider of the scooter. In the event of an accident, all the energy of said accident will be transmitted to the steering column of the scooter, and as the box is integral with the steering, in turn the energy from the accident will be transmitted to the rigid plastic box. Its location between the steering column of the scooter and the rider will cause the rigid box to impact the rider's body, which could cause direct injuries to the rider's body. In addition, since this box is made of rigid plastic material that has sharp and cutting edges, it could increase the injuries caused to the driver's body in the event of a direct impact.

Another very important drawback of this system is that it only allows the transport of a helmet specially designed for this box, which must be folded in three sections and, therefore, very special and far from the dimensions and characteristics of a standard approved helmet for scooters. It is not valid, therefore, for any helmet model.

Due to all the above, the safety bumper, object of the present invention, overcomes the difficulties of the other devices described, notably improving its characteristics as passive safety elements of the scooter, preventing the driver from receiving all the energy released in a collision, and therefore minimizing its consequences in the form of injuries.

In addition, due to the volume design of the bumper box, it allows the transport of any approved helmet for scooter/bicycle, which makes it very useful also for carrying this element inside.

If a protective helmet is tucked in a housing, the bumper will also act as a passive safety system, minimising the consequences of an accident for both the scooter and the rider, and even on a hypothetical pedestrian run over.

In addition, due to the mounting of this new invention on the front of the steering column, it does not interfere with the folding mechanism of the scooter, nor with its transport once folded.

### SUMMARY

This invention aims to reduce the effects of and damage to a scooter accident, both on the scooter and on the rider, as well as on a hypothetical pedestrian run over, or any other barrier it impacts.

The designed bumper allows its use in any type of scooter, including electric ones, regardless of the mechanical characteristics of the scooter, so its application is universal for all these vehicles and can house any standard helmet for scooters and/or bicycles.

The bumper comprises a rigid body made of thermoplastic material, preferably EVA (ethyl vinyl acetate) for its favourable mechanical and energy absorption characteristics, having different thicknesses in its walls, the front wall being thicker, which would receive the blow first, and the rear wall, which is in contact with the steering column.

The reason for this difference in the thicknesses of these parts is due to the fact that in this way and with this design, greater resistance and energy absorption will be achieved against direct or indirect impacts on both parts, thus increasing their characteristics as a safety system.

The material with which it is made allows it to deform in the event of impact, thus promoting the absorption of energy from a frontal accident.

The bumper has two main parts or lids, joined at the bottom by an articulated hinge and at the top by a mechanical closure, so that the two lids can be separated at the top, which will always remain joined by the hinge, and allow access to its interior.

On the inside of the bumper there are partitions that define internal gaps. The larger hole allows the safety helmet of the scooter rider to be located inside when the scooter is not being used.

This circumstance notably improves the characteristics of the systems listed above in the state of the art, since it can store any type of helmet designed for scooters or bicycles and not only a type of helmet specially designed, as shown by some of the cases described.

In addition, the inclusion of a helmet inside the bumper, object of the present invention, allows it, in case of an accident, to use its properties as an energy absorber.

Inside the bumper, and to increase its energy absorbing properties, the inner opening at the top of both covers houses several elements of flexible plastic material, preferably EPS (expanded polystyrene) due to their good mechanical and energy absorbing characteristics, in housings generated with internal partitions in the bumper. These elements will act as complementary energy absorbers in the event of an accident, whether or not the bumper contains the helmet, and will always be conveniently arranged to perform this important protective function.

Another element made of flexible plastic material that can be located in the inner cavity of any of the covers of the invention is a dispenser of hygienic and disposable protective head covers, which in the event that the driver deems it appropriate can be used to put it on the head as a hygienic measure especially in the event that the scooter and its helmet, were used by several people.

To house this dispenser, one of the flexible plastic elements can be removed from the covers of their housing, and placed inside.

The rear wall of the bumper has a grooved design so that it can easily adapt the bumper to the front of the steering column of the scooter, also having plastic clamps that will fix the device on top of the steering column of the scooter. The preferred embodiment is 3 clamps.

These plastic fixing clamps will have their adjustment pins inside the bumper shaft, so that once it is closed by means of its upper closure, it cannot be disassembled from the scooter and this will protect its contents against theft.

This upper closure will have the double function of closing the bumper to prevent access inside it and joining the two parts of the bumper by their upper areas.

With the closure open, there will be access from the outside to pick up/leave the safety helmet, while, if the closure remains closed, the bumper cannot be opened, forming a closed structure, without access to its interior and firmly attached to the steering column from the front.

The operation of the closure mechanism can be carried out purely mechanically, with a conventional closure, with a contact sensor, or designed to be carried out by means of a remote system in which an application can open the closure, allowing access to the inside of the bumper and to access the safety helmet.

In addition, it will preferably have a plastic clamp of greater thickness than those mentioned above, placed at the bottom of the invention and external to it, which will act as a lower buffer preventing the vertical displacement of the bumper downwards.

The integral design of the bumper is made of flexible thermoplastic materials, preferably EVA (ethyl vinyl acetate), so that, thanks to the characteristics of these materials, they will deform in the event of a frontal collision, absorbing the energy from a front-facing accident to the scooter, minimally increasing the total weight of the scooter, since they are low and medium density materials, and very low in weight, in addition to being a material resistant to atmospheric agents.

The increase in the total mass of the scooter to which the bumper object of this invention has been mounted is minimal and therefore will not affect its riding, contrary to what happened in some of the cases described in the state of the art, so it is a very convenient novelty from the perspective of dynamic safety.

### BRIEF DESCRIPTION OF THE FIGURES

Figure 1 shows the complete closed bumper attached to the scooter, specifically to its steering mechanism.
Figure 2 shows the full bumper open, containing a safety helmet inside.
Figure 3 shows the bumper assembly, closed and disassembled from the scooter. Its rear fixing clamps can be seen, as well as its upper opening and closing mechanism.
Figure 4 shows the bumper assembly open, with the detail of all its identified parts.
Figure 5 shows a cross section of the front and rear covers, in which the greater thickness of the front and rear wall of the bumper can be seen.

### DETAILED DESCRIPTION

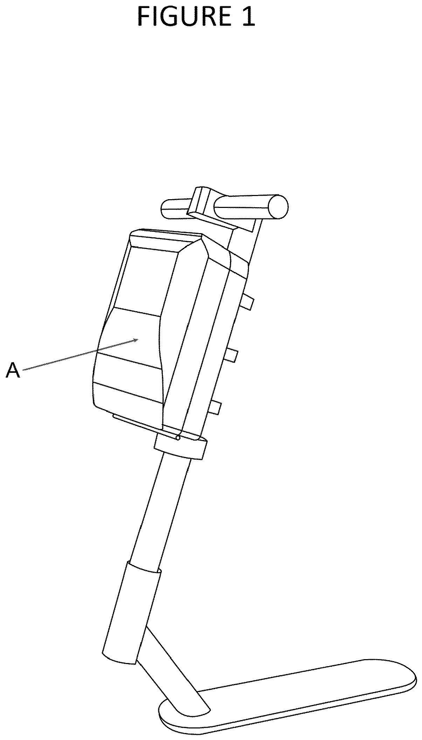

Figure 1 shows the body of the closed bumper element, in the position it occupies mounted on any electric scooter.

It can be seen that it is installed in the steering column of the scooter, in the upper position of this column and very close to the handlebars. The most important function as an energy absorbing element of the bumper is favoured by this mounting position, since in addition to receiving the impact from any frontal object against which it impacts before it is received by the column, it will allow the programmed deformation of the invention absorbing energy, without transmitting it to the rest of the scooter and to the rider.

In addition, the special design of the front cover of the bumper (A) can also be seen, with all the edges or rounded corners, lacking angles and cutting lines that could cause injuries in the event of an impact against a pedestrian, and which allows the adequate accommodation of a universal bicycle and scooter safety helmet inside.

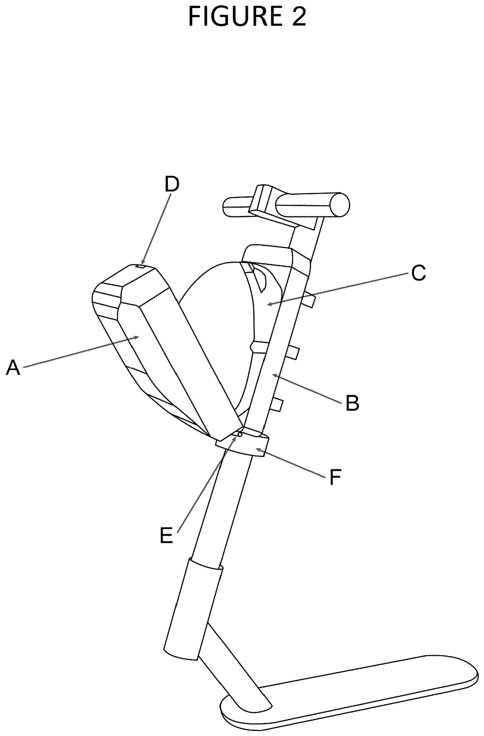

Figure 2 shows this same position of the bumper, but this time open and showing its front cover (A), and its rear cover (B), as well as some of its interior elements.

The position of the safety helmet (C) can be seen. It can be stored if the scooter is not used, and that, by tilted opening of its front cover (A) allows the helmet to be placed inside comfortably and quickly and easily, also preventing theft.

The opening is done thanks to the operation of the closure (D) located on its upper part, which together with the folding mechanism of the front cover (A), thanks to the hinge (E) located on the bottom, allows access to the inside of the bumper.

It also shows the lower stop clamp (F) to prevent vertical movement of the bumper, once attached to the steering column of the scooter.

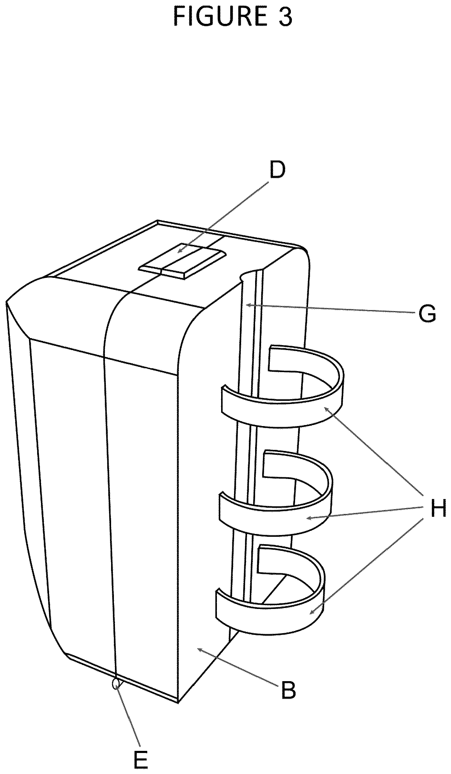

Figure 3 shows the rear part of the invention. In said rear wall you can see the groove (G) made in the rear cover (B) of the bumper, and which allows it to fit perfectly to the steering column of any scooter.

Figure 3 also shows the clamps (H) for mounting and fixing the bumper to the steering column of the scooter, with its attachment pin inside the bumper box, thus preventing said clamps from being disassembled without the bumper box being open, which will work as an anti-theft system of the invention, once it is mounted on any scooter. In a preferred embodiment there are three clamps, as shown in the figure.

It also shows the upper closure (D) and the lower hinge (E).

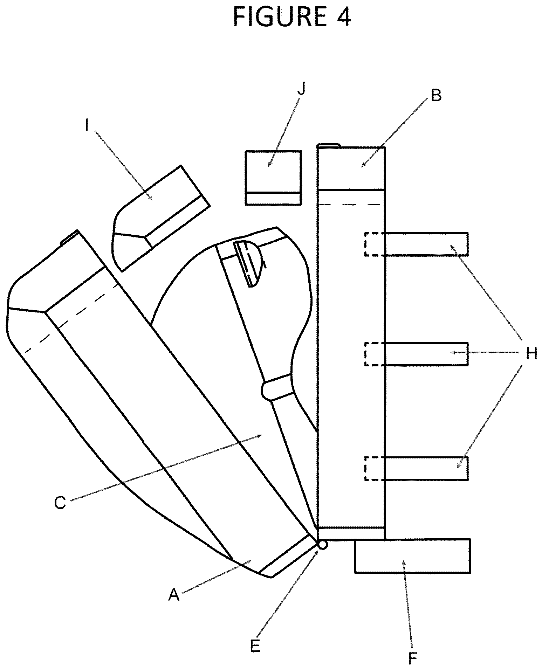

Figure 4 shows the placement of the inner flexible plastic elements of the bumper. The front cover (A) houses the flexible plastic element (I) and the rear cover (B) houses the flexible plastic element (J).

The dispenser of protective sanitary covers for the head can be housed in the upper space left by the plastic element (J) or the (I) for removing them.

The arrangement of these flexible plastic preferably made of EPS, together with the structure of the bumper, will absorb the energy coming from an accident while riding the scooter, either with the safety helmet placed inside the inner cavity of the bumper, or without it.

It also shows the position of the three anchorage clamps (H) and the lower hinge (E).

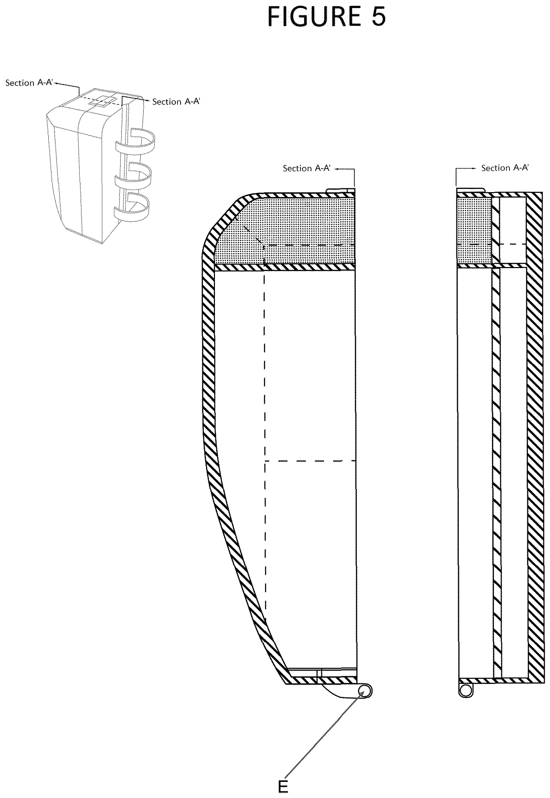

Figure 5 shows a cross-section of the two bumper covers, the front and the rear, in which the greater thickness of the material can be seen on both its front and rear surfaces, as well as the lower hinge (E).

## Claims

1. Safety bumpers for use on scooters, which can be mounted on any type and model of scooter, including electric scooters and which is **characterized in that**,
- it comprises a body made of thermoplastic materials having energy-absorbing characteristics, formed by two covers, one front and one rear, which are joined together by a lower hinge and which can be opened by a mechanical closing/opening mechanism located at the top of said covers.
- The rear cover has a vertical groove and clamps for attachment to the steering column of the scooter.
- The front and rear walls of the covers have greater material thicknesses than those of the rest of the bumper, to optimally absorb energy from a front impact, and both front and rear covers have internal partitions that generate internal cavities or housings into which elements made of flexible plastic material with appropriate energy absorption characteristics are inserted, whether or not detachable, to increase the absorption energy of the bumper in case of a front impact.

2. Bumper according to claim 1, **characterized in that** it is made of EVA (ethyl vinyl acetate).

3. Bumper according to claim 1, **characterized in that** its flexible plastic elements are made of EPS (expanded polystyrene) and housed in its cavities or internal housings.

4. Bumper according to claim 1, **characterized in that** it has a hollow interior that has the capacity to accommodate a safety helmet for scooters or bicycles.

5. Bumper according to claim 1, **characterized in that** the fixing clamps have an adjustment and closing pin that remains inside the body of the bumper.

6. Bumpers according to claim 5, **characterized in that** there are three clamps.

7. Bumper according to claim 1, **characterized in that** a lower stop clamp is provided fastened to the steering column to prevent the vertical displacement of the rigid body.

8. Bumper according to claim 1, **characterized in that** the closing/opening mechanism is a remotely controlled system with a computer application.

9. Bumper according to claim 1, **characterized in that** in its front cover all the edges or corners are rounded so that they cannot be dangerous in case of impact in accidents.

10. Bumper according to claim 1, **characterized in that** in one of the inner recesses of the lids one of the removable energy-absorbing elements is replaced by a dispenser of disposable hygienic protective head covers.

11. Bumper according to claim 1, **characterized by** incorporating reflective elements on the external front and/or side surfaces of the front and rear covers.
